# EUROPÄISCHE PATENTSCHRIFT

(11) **EP 2 132 537 B1**
(45) Veröffentlichungstag und Bekanntmachung des Hinweises auf die Patenterteilung: **15.03.2017**
(21) Anmeldenummer: 07857952.1
(22) Anmeldetag: 20.12.2007
(51) Int. Cl.: G01F 23/296, G01N 9/00, G01N 11/16, B06B 1/06

(54) **VORRICHTUNG ZUR BESTIMMUNG UND/ODER ÜBERWACHUNG EINER PROZESSGRÖSSE EINES MEDIUMS**
DEVICE FOR DETERMINING AND/OR MONITORING A PROCESS VARIABLE OF A MEDIUM
DISPOSITIF DE DÉTERMINATION ET/OU DE CONTRÔLE D'UNE GRANDEUR DE PROCESSUS D'UN FLUIDE

(30) Priorität: 16.01.2007 DE 102007003103; 26.11.2007 DE 102007057124
(43) Veröffentlichungstag der Anmeldung: 16.12.2009
(73) Patentinhaber: Endress+Hauser GmbH+Co. KG, 79689 Maulburg (DE)
(72) Erfinder: D'ANGELICO, Sascha, 79595 Rümmingen (DE); LOPATIN, Sergej, 79540 Lörrach (DE); PFEIFFER, Helmut, 79585 Steinen (DE)
(74) Vertreter: Andres, Angelika Maria
(86) Internationale Anmeldenummer: PCT/EP2007/064331
(87) Internationale Veröffentlichungsnummer: WO 2008/086936

(56) Entgegenhaltungen:
- WO-A-03/002952
- CH-A5- 681 113
- JP-A- 2005 151 663
- US-A- 4 114 423

## Beschreibung

Die Erfindung bezieht sich auf eine Vorrichtung zur Bestimmung und/oder Überwachung mindestens einer Prozessgröße eines Mediums, mit mindestens einer mechanisch schwingfähigen Membran, welche eine Vielzahl von natürlichen Eigenmoden aufweist, und mit mindestens einer Anrege-/Empfangseinheit, welche die Membran zu mechanischen Schwingungen anregt und/oder welche von der Membran mechanische Schwingungen empfängt. Bei der Prozessgröße handelt es sich beispielsweise um den Füllstand, die Dichte oder die Viskosität des Mediums, welches beispielsweise eine Flüssigkeit oder ein Schüttgut ist. Das Medium befindet sich vorzugsweise in einem Behälter.

Im Stand der Technik sind zur Bestimmung des Füllstands und weiterer Prozessgrößen eines Mediums so genannte Schwinggabeln und Einstäbe bekannt. Ausgenutzt wird jeweils, dass die Kenngrößen der Schwingungen (Schwingungsamplitude, Resonanzfrequenz, Phasengang über Frequenz) der schwingfähigen Einheit vom Kontakt mit dem Medium bzw. auch von dessen Eigenschaften abhängen. So nimmt beispielsweise die Frequenz oder die Amplitude der Schwingungen ab, wenn das Medium die schwingfähige Einheit erreicht und zumindest teilweise bedeckt. Daher lässt sich aus der Abnahme der Schwingungsfrequenz bzw. der Amplitude darauf schließen, dass das Medium einen von der Ausgestaltung und der Position der Anbringung der Vorrichtung abhängigen Füllstand erreicht hat. Weiterhin ist die Schwingungsfrequenz auch beispielsweise von der Viskosität und der Dichte des Mediums abhängig. Bei der Ausgestaltung als Schwinggabel haben solche Messgeräte mindestens zwei Spaten oder Gabelzinken, welche auf einer Membran angebracht sind und welche gegenphasig zueinander schwingen. Das Messprinzip ist für Flüssigkeiten und Schüttgüter universell einsetzbar. Durch die Spaten ist es jedoch nicht möglich, ein frontbündiges Messgerät bereitzustellen, da solche Messgeräte immer mindestens zwei Spaten besitzen, die das Medium erfassen.

Weiterhin sind aus dem Stand der Technik vibronische Messgeräte zur Bestimmung der Dichte mit einer von einer Halterung gehaltenen, also im Wesentlichen frei schwingenden, Platte bekannt geworden. In dieser Hinsicht schlägt die US04114423 zum Zweck, eine durch die Halterung möglichst unbeeinflusste Schwingung der Platte zu garantieren vor, die Platte an einer Haltestelle anzubringen, an welcher sich zumindest zwei Knotenlinien schneiden. Die CH0681113A5 beschäftigt sich für dagegen für ein derartiges Messgerät, sowie für vibronische Sensoren mit anderen schwingfähigen Einheiten mit der Problematik der Kompressibilität von Gasen. Wichtig bei mechanisch schwingfähigen Systemen ist im Allgemeinen, dass keine Schwingungsenergie, z.B. über eine Ankopplung mit dem Behälter verloren geht. Ein Energieverlust ist üblicherweise mit einer Beeinträchtigung der Anwendbarkeit bzw. mit Fehlmessungen bzw. in der Anwendung als Schalter mit Fehlschaltungen verbunden. Gleichzeitig kann der Energieverlust selten durch eine höhere Antriebsleistung kompensiert werden, da die beschriebenen Messgeräte, welche meist als Schalter eingesetzt werden, üblicherweise mit einer geringen und begrenzten Energieversorgung betrieben werden. In dieser Hinsicht ist aus der WO03002952A1 ein vibronischer Sensor mit einem Einstab bekannt geworden, bei welchen aus den mechanischen Schwingungen zumindest eine sensor- und/oder prozessbedingte Störung erkannt wird, und wobei zur mechanischen Entkopplung des Sensors ein federndes Element oder ein Zwischenstück vorgesehen ist.

Für möglichst breit anwendbare Messungen ist es weiterhin vorteilhaft, wenn die wirksame Masse der mechanisch schwingfähigen Einheit möglichst klein und die wirksame Fläche, welche in Kontakt mit dem Medium kommt, möglichst groß ist. Dem steht jedoch die Problematik gegenüber, dass die schwingfähige Einheit vorzugsweise durch möglichst kleine Bohrungen von hinten in die Behälter, in welchem sich das Medium befindet, eingebracht wird.

Die so genannten Membranschwinger oder die Sensoren, welche mit der Grundbiegemode der Membran arbeiten, finden nur sehr begrenzte Anwendbarkeit in der Messtechnik, da sich stets mechanische Kopplungen der Membran mit dem Prozessanschluss einstellen. Deshalb lassen sich solche Messgeräte nur sehr bedingt für Flüssigkeiten und Schuttgüter verwenden. Vorteilhaft ist gleichwohl, dass solche Vibrationsgrenzschalter bedingt dadurch, dass sie nur eine Membran aufweisen, einen frontbündigen Aufbau ermöglichen. Es erleichtert die Reinigung der Behälter/Tanks und bringt Vorteile für die Prozesstools in Lebensmittelindustrie, Chemie, Pharma und so weiter.

Die Aufgabe der Erfindung besteht somit darin, ein Vibrationsmessgerät vorzuschlagen, dessen schwingfähige Einheit möglichst gut mechanisch entkoppelt ist und welches auch für den Einbau bei kleinen Anschlüssen Prozessgrößen des Mediums zuverlässig erkennt.

Zur Lösung der Aufgabe sind die Antriebs-/Empfangseinheit und die Membran des erfindungsgemäßen frontbündigen Membranschwingers frontbündig an den Behälters anbringbar und derartig ausgestaltet und aufeinander abgestimmt, dass die Membran lediglich mechanische Schwingungen ausführt, welche Moden entsprechen, die oberhalb der Grundmode der Membran liegen. Oder mit anderen Worten: Die Membran wird zu Oberwellenschwingungen angeregt, welche oberhalb der Grundwelle oder der Grundmode der Membran liegen. Die Membran ist dabei an mindestens einer Einspannung befestigt, die aus einem Ring besteht, an welchem die Membran befestigt ist und aus einem Grundkörper, welcher sich an den Ring anschließt und welcher die Befestigung an dem Behälter erlaubt.

In der Erfindung werden in einer Ausgestaltung insbesondere gegenphasige Schwingungsmoden der insbesondere kreisförmigen Membran angeregt. Je nach den geometrischen Abmessungen liegt dabei die Schwingfrequenz ggf. über 20 kHz, wie beispielsweise bei einer Membran mit 1 Zoll Durchmesser und etwa 1 mm Dicke. Die Schwingungsfrequenz ist dabei abhängig von der Membrandicke und dem Membrandurchmesser, sowie dem verwendeten Material. Das Medium befindet sich vorzugsweise in einem Behälter, an welchem frontbündig die Membran anbringbar ist.

Eine Ausgestaltung der Erfindung beinhaltet, dass die Antriebs-/Empfangseinheit und die Membran derartig ausgestaltet und/oder relativ zueinander angeordnet sind, dass das Auftreten von mechanischen Schwingungen der Membran, welche der Grundmode der Membran entsprechen, im Wesentlichen verhindert ist. In einer Ausgestaltung ist die Antriebs-/Empfangseinheit derartig ausgestaltet und mit der Membran verbunden, dass die Antriebs-/Empfangseinheit keine Grundmode der Membran anregen kann. In einer weiteren Ausgestaltung ist die Membran selbst derartig ausgestaltet, dass Schwingungen in der Grundmode verhindert sind.

Eine Ausgestaltung der Erfindung sieht vor, dass die Antriebs-/Empfangseinheit im Wesentlichen nur die Membran zu Schwingungen anregt. Für die Entkopplung kann es dabei dazu kommen, dass zumindest ein Teil der Einspannung der Membran Kräfte und Momente erfährt. Die Einspannung ist dabei jedoch ein Bestandteil des Messgerätes, so dass über das Messgerät selbst die Entkopplung auftritt und zumindest keine Kräfte oder Momente auf den Behälter selbst übertragen werden.

Eine Ausgestaltung der Erfindung beinhaltet, dass die Antriebs-/Empfangseinheit und die Membran derartig ausgestaltet und aufeinander abgestimmt sind, dass die Membran derartige mechanische Schwingungen ausführt, dass sich 2*n Teilbereiche der Membran ergeben, und dass jeweils benachbarte Teilbereiche gegenphasige Bewegungen ausführen, wobei n eine natürliche Zahl ist. Dabei ist n größer oder gleich 1, d.h. n = 1, 2, 3, 4... Die Summe der Teilbereiche ist insbesondere ein ganzzahliges Vielfaches von 2, d.h. die Anzahl der Berge und Täler bzw. die Anzahl der gegenphasigen Schwingungsbereichen bei den Schwingungen ist jeweils gleich.

Eine Ausgestaltung der Erfindung sieht vor, dass die Antriebs-/Empfangseinheit und die Membran derartig ausgestaltet und aufeinander abgestimmt sind, dass die Membran derartige mechanische Schwingungen ausführt, dass sich 2*n symmetrische Teilbereiche der Membran ergeben, und dass jeweils benachbarte Teilbereiche gegenphasige Bewegungen ausführen, wobei n eine natürliche Zahl ist. Der Fall n = 2 bedeutet, dass die Membran zwei Übergänge zwischen gegenphasigen Teilbereichen aufweist und somit zwei Berge und Täler besitzt, die alternierend zueinander schwingen. Der Übergang zwischen solchen Bereichen ist eine Linie, welche durch die Membranmitte verläuft und entlang der keine Schwingungen auftreten.

Eine Ausgestaltung der Erfindung beinhaltet, dass eine dem Medium zugewandte Seite der Membran frei von schwingfähigen Einheiten ist. Es handelt sich somit in dieser Ausgestaltung um einen reinen Membranschwinger, dessen Membran frei ist von einem Einstab oder von den Gabelzinken einer Schwinggabel. Insbesondere handelt es sich um einen gegenphasigen Membranschwinger. Mit anderen Worten: Es handelt sich um einen frontbündigen Membranschwinger, der wegen der gegenphasigen Membranschwingungen von dem Prozessanschluss mechanisch entkoppelt ist.

Eine Ausgestaltung der Erfindung sieht vor, dass die Antriebs-/Empfangseinheit und die Membran derartig ausgestaltet und aufeinander abgestimmt sind, dass die Membran in dem Fall, dass die Membran frei von Medium schwingt, mechanische Schwingungen mit einer Frequenz größer als 2 kHz ausführt. Die erste Oberwelle der Membran liegt somit oberhalb von 2 kHz. Die Resonanzfrequenz einer Schwinggabel liegt dazu im Vergleich beispielsweise zwischen 0,1 und 1,4 kHz. Die Frequenz des Membranschwingers hängt dabei auch von der Dimensionierung ab. Mit einem größeren Durchmesser und einer dünneren Membran sind auch Schwingungen im niedrigeren Frequenzbereich möglich.

Eine Ausgestaltung der Erfindung beinhaltet, dass die Antriebs-/Empfangseinheit und die Membran derartig ausgestaltet und aufeinander abgestimmt sind, dass die Membran in dem Fall, dass die Membran frei von Medium schwingt, mechanische Schwingungen mit einer Frequenz größer 5 kHz ausführt.

Eine Ausgestaltung der Erfindung beinhaltet, dass die Antriebs-/Empfangseinheit und die Membran derartig ausgestaltet und aufeinander abgestimmt sind, dass die Membran in dem Fall, dass die Membran frei von Medium schwingt, mechanische Schwingungen mit einer Frequenz größer 20 kHz ausführt. Dies bezieht sich beispielsweise auf einen Membranschwinger mit einer Membran mit 1 Zoll Durchmesser und 1 mm Dicke.

Eine Ausgestaltung der Erfindung sieht vor, dass die Membran kreisförmig oder oval oder rechteckig oder quadratisch ausgestaltet ist.

Eine Ausgestaltung der Erfindung beinhaltet, dass die Membran an mindestens einer Einspannung befestigt ist. In einer Ausgestaltung besteht die Einspannung aus einem Ring, an welchem die Membran befestigt ist, und aus einem Einschraubstück, welches sich an den Ring anschließt und welches die Befestigung an dem Behälter etc. erlaubt.

Eine Ausgestaltung der Erfindung sieht vor, dass mindestens eine Auswerteeinheit vorgesehen ist, welche die mechanischen Schwingungen der Membran in Hinsicht auf die Prozessgröße auswertet. Bei der Auswerteeinheit handelt es sich beispielsweise um einen Mikrocontroller oder beispielsweise um eine analoge Schaltung, bei welcher die Änderung der Frequenz und/oder der Amplitude in Relation zu einem Grenzwert erkannt und entsprechend ausgewertet wird.

Eine Ausgestaltung der Erfindung beinhaltet, dass die Auswerteeinheit die mechanischen Schwingungen zumindest in der Hinsicht auswertet, ob das Medium die Membran zumindest teilweise bedeckt. Insbesondere für die Prozessgröße Füllstand lässt sich der Grad der Bedeckung der Membran durch das Medium an den Schwingungen bzw. an den Kenngrößen wie Amplitude oder Frequenz der Schwingungen der Membran bestimmen. Jedoch auch für andere Prozessgrößen, wie z.B. Viskosität oder Dichte ist eine Aussage über den Grad der Bedeckung wesentlich für die Bestimmung bzw. Überwachung der jeweiligen Prozessgröße.

Eine Ausgestaltung der Erfindung sieht vor, dass die Antriebs-/Empfangseinheit mindestens ein piezoelektrisches Element aufweist.

Eine Ausgestaltung der Erfindung beinhaltet, dass das piezoelektrische Element derartig ausgestaltet und/oder kontaktiert ist, dass das piezoelektrische Element mindestens zwei getrennte Bereiche aufweist, und dass das piezoelektrische Element derartig angeordnet und mit der Membran verbunden ist, dass die zwei getrennten Bereiche des piezoelektrischen Elements jeweils einen Teilbereich der Membran zu mechanischen Schwingungen anregen. Das piezoelektrische Element der Antriebs-/Empfangseinheit besteht somit beispielsweise aus zwei Bereichen, die entweder in der gleichen Richtung, z.B. axial, d.h. in Richtung der Normalen der Membran, oder in einander entgegen gesetzter Richtung polarisiert sind. Eine solche Teilung lässt sich beispielsweise erzeugen, indem die elektrische Kontaktierung mit Elektroden entsprechend nur auf Bereiche des piezoelektrischen Elements bezogen ist. Werden die beiden Bereiche des piezoelektrischen Elements entweder mit gegenphasigen (gleiche Polarisation) oder mit gleichphasigen (entgegen gesetzte Polarisation) Wechselspannungssignalen beaufschlagt, so führen die Bereiche jeweils eine unterschiedliche Oszillation aus. D.h. ein Bereich zieht sich zusammen (die Dicke nimmt ab) und der andere Bereich dehnt sich auseinander (die Dicke nimmt zu). Dies führt dazu, dass auch der entsprechende Teilbereich der Membran, welcher jeweils vorzugsweise oberhalb eines Bereichs des piezoelektrischen Elements angesiedelt ist, auch jeweils eine andere Schwingung ausführt. D.h. in dieser Ausgestaltung befindet sich unter einem Teilbereich der Membran ein getrennter Bereich des piezoelektrischen Elements.

Eine Ausgestaltung der Erfindung sieht vor, dass ein Trennbereich zwischen den mindestens zwei getrennten Bereichen des piezoelektrischen Elements im Wesentlichen in der Nähe eines Trennbereichs zwischen den Teilbereichen der Membran angeordnet ist. In einer Ausgestaltung regt das piezoelektrische Element zu Schwingungen der Mode an, in welcher zwei Teilbereiche der Membran gegenphasig zueinander schwingen. Hierfür wird das piezoelektrische Element derartig kontaktiert bzw. ist es derartig ausgestaltet, dass sich zwei getrennte Bereiche im piezoelektrischen Bereich ergeben. Das Element ist dabei derartig relativ zur Membran angeordnet, dass sich der Trennbereich zwischen den beiden Teilbereichen der Membran oberhalb des Teilbereichs zwischen den beiden getrennten Bereichen des piezoelektrischen Elements befindet. Das Element befindet sich somit bei einer runden Membran unterhalb einer Diagonalen der Membran, welche zwischen den zwei Teilbereichen verläuft.

Eine Ausgestaltung der Erfindung beinhaltet, dass das piezoelektrische Element derartig angeordnet und mit der Membran verbunden ist, dass das piezoelektrische Element einen Teilbereich der Membran zu mechanischen Schwingungen anregen. In dieser Ausgestaltung wird vorzugsweise nur ein Teilbereich der Membran zu diesen Schwingungen angeregt.

Eine Ausgestaltung der Erfindung beinhaltet, dass die Antriebs-/Empfangseinheit mindestens zwei piezoelektrische Elemente aufweist, und dass die piezoelektrischen Elemente an unterschiedlichen Bereichen mit der Membran verbunden sind. In dieser Ausgestaltung sorgt somit jeweils ein piezoelektrisches Element für die Bewegung eines Teilbereichs der Membran. Die Bereiche sind je nach Art der zu erregenden Schwingungen passend zu wählen.

Eine Ausgestaltung der Erfindung sieht vor, dass die piezoelektrischen Elemente Biegeverformungen der Membran erzeugen. Durch die Kontaktierung mit der Membran, die beispielsweise über eine vollflächige Verklebung stattfindet, wird somit in der Membran eine Biegeschwingung erzeugt, wenn das piezoelektrische Element mit einer Wechselspannung beaufschlagt wird. In einer Ausgestaltung erzeugen die piezoelektrischen Elemente Kräfte in radialer Richtung. Durch die Fixierung der Elemente an der Membran erzeugen die radialen Kräfte eine entsprechende Verformung der Membran.

Die Antriebs-/Empfangseinheit besteht somit in einer Ausgestaltung mindestens aus zwei piezoelektrischen Elementen, welche einen sog. piezoelektrischen Bimorphantrieb darstellen. Die Elemente sind dabei in einer Ausgestaltung mit der Innenseite der Membran verklebt. Aufgrund der Klebung geht dies ggf. mit einer Beschränkung des Temperaturbereichs einher.

Eine Ausgestaltung der Erfindung beinhaltet, dass mindestens eine Hemmeinheit vorgesehen ist, welche derartig ausgestaltet und mit der Membran verbunden ist, dass Schwingungen der Grundmode der Membran durch die Hemmeinheit verhindert sind. In dieser Ausgestaltung wird also mechanisch die Schwingung der Membran in der Grundmode verhindert, indem diese Biegung beispielsweise verhindert wird. Vorteilhaft an dieser Ausgestaltung ist, dass so eine größere Robustheit gegeben ist und dass eine parasitäre Schwingung auf einer Grundmode der Membran verhindert wird.

Um den Freiheitsgrad der Membran in axialer Richtung (erste Mode oder Grundwelle) einzuschränken, ist in der Mitte der Membran beispielsweise ein Bolzen als Hemmeinheit befestigt, welcher wiederum mit dem Gehäuse des Messgerätes, z.B. der Einspannung oder dem die Membran umfassenden Einschraubstück in fester Verbindung steht. Die Dimensionierung des Bolzenquerschnitts ist in einer Ausgestaltung derartig gestaltet, dass bei Druckbelastung auf die Membran und damit auf den Bolzen als Hemmeinheit die Spannungen im Querschnitt unterhalb der Streckgrenze liegen. Zudem ist die Länge des Bolzens so ausgelegt, dass die Biegesteifigkeit groß gegenüber der Biegesteifigkeit der Membran ist. Aufgrund dieser Konstruktion bestimmt vorwiegend die Ausgestaltung der Membran die Schwingfrequenz und die Hemmeinheit verfügt nur über einen untergeordneten Einfluss auf die Schwingfrequenz. Insbesondere ist die Hemmeinheit kein Bestandteil des Resonators, welcher zu den Schwingungen angeregt wird und dessen Schwingungen zur Bestimmung und/oder Überwachung der Prozessgröße herangezogen werden.

Eine Ausgestaltung der Erfindung sieht vor, dass die Hemmeinheit auf der vom Medium abgewandten Seite der Membran befestigt ist. Die Hemmeinheit befindet sich somit auf der Innenseite bzw. im Innenraum des erfindungsgemäßen Messgerätes.

Eine Ausgestaltung der Erfindung beinhaltet, dass die Hemmeinheit im Wesentlichen in der Mitte der Membran befestigt ist.

Eine Ausgestaltung der Erfindung sieht vor, dass die Antriebs-/Empfangseinheit derartig ausgestaltet und mit der Hemmeinheit verbunden ist, dass die Antriebs-/Empfangseinheit die Membran über die Hemmeinheit zu mechanischen Schwingungen anregt. Die Hemmeinheit erfüllt somit in dieser Ausgestaltung eine dreifache Funktion, indem sie zum einen die Grundschwingungen verhindert und zum anderen die Schwingungen der erwünschten Oberwellen erzeugt, sowie eine erhöhte Druckbelastung auf die Membran zulässt.

Eine Ausgestaltung der Erfindung beinhaltet, dass die Antriebs-/Empfangseinheit auf der von der Membran abgewandten Seite mit der Hemmeinheit mechanisch verbunden ist. Die Antriebs-/Empfangseinheit ist somit in dieser Ausgestaltung quasi an der Unterseite der Hemmeinheit angebracht.

Eine Ausgestaltung der Erfindung sieht vor, dass die Antriebs-/Empfangseinheit im Wesentlichen Kippbewegungen erzeugt.

Eine Ausgestaltung der Erfindung beinhaltet, dass die Antriebs-/Empfangseinheit längs einer Symmetrieachse der Hemmeinheit mit der Hemmeinheit mechanisch, insbesondere kraftschlüssig verbunden ist. In dieser Ausgestaltung befindet sich die Antriebs-/Empfangseinheit an der Seite der Hemmeinheit.

Eine Ausgestaltung der Erfindung sieht vor, dass die Antriebs-/Empfangseinheit Biegebewegungen der Hemmeinheit längs der Symmetrieachse erzeugt.

Die zuvor beschriebene alternative Ausgestaltung der Erzeugung der Schwingungen hat den Vorteil, dass so die Antriebs-/Empfangseinheit weiter vom Prozess, von dem Medium und damit von den dort herrschenden Temperaturen und dem Prozessdruck abgesetzt ist, d.h. diese Ausgestaltung lässt sich somit auch bei höheren Temperaturen, z.B. größer 300°C anwenden. In dieser Ausgestaltung wird durch die Hemmeinheit, welche z.B. als Bolzen oder als Stößel ausgeführt ist, direkt die gegenphasige Schwingungsmode der Membran angeregt. Ein weiterer Vorteil ist, dass auch die für das Messgerät zulässige Prozessdruckbelastung höher liegt, als beispielsweise in der Variante, dass die piezoelektrischen Elemente der Antriebs-/Empfangseinheit direkt auf der Innenseite der Membran befestigt sind.

Eine Ausgestaltung beinhaltet, dass mindestens ein Steg vorgesehen ist, dass der Steg mit der Membran mechanisch gekoppelt ist, und dass die Antriebs-/Empfangseinheit derartig ausgestaltet und mit dem Steg verbunden ist, dass der Steg zumindest zeitweise im Wesentlichen eine Wippbewegung ausführt. In dieser Ausgestaltung befindet sich ein Steg oder eine Brücke vorzugsweise auf der vom Medium abgewandten Seite der Membran. Der Steg ist dabei vorzugsweise an zwei einander diametral gegenüberliegenden Bereichen mit der Membran mechanisch gekoppelt. Der Steg wird dabei durch die Antriebs-/Empfangseinheit zu Wippbewegungen angeregt, wobei beispielsweise die beiden Endbereiche des Stegs durch die Antriebs-/Empfangseinheit einander entgegen gerichtete Bewegungen ausführen, so dass sich insgesamt die Bewegungen einer Wippe ergeben. D.h. bewegt sich der eine Endbereich des Steges von der Membran fort, so wird der andere Endbereich näher an die Membran herangeführt. Da der Steg in einer Ausgestaltung über zwei Bereiche mit der Membran verbunden ist, wird auch die Membran an diesen beiden Bereichen zu gegenphasigen Bewegungen angeregt. Insgesamt lässt sich somit diese Ausgestaltung der Anregung von Schwingungen als Wippantrieb bezeichnen.

Eine Ausgestaltung sieht vor, dass der Steg über mindestens zwei Trägereinheiten mit der Membran mechanisch gekoppelt ist. In einer Ausgestaltung ergibt sich somit insgesamt eine U-förmige Einheit aus den beiden Trägereinheiten und dem Steg, wobei die beiden Enden des Us mit der Membran münden, also mit dieser verbunden sind.

Eine Ausgestaltung beinhaltet, dass der Steg und die zwei Trägereinheiten einstückig ausgestaltet sind. In dieser Ausgestaltung bilden somit beispielsweise der Steg und die zwei Trägereinheiten ein einziges U-förmiges Bauteil.

Eine Ausgestaltung sieht vor, dass die Hemmeinheit im Wesentlichen in der Mitte des Steges angeordnet ist. Diese Ausgestaltung geht damit einher, dass die Hemmeinheit im Wesentlichen in der Verlängerung der Mitte der Membran angeordnet ist. Die Hemmeinheit ragt somit in einer Ausgestaltung durch die Mitte des Steges hindurch. In einer weiteren Ausgestaltung mündet sie unterhalb der Mitte des Steges. In einer Ausgestaltung ist die Länge des Steges im Wesentlichen gleich dem Durchmesser der kreisförmigen Membran.

Eine Ausgestaltung beinhaltet, dass die Antriebs-/Empfangseinheit im Wesentlichen in der Mitte des Steges angeordnet ist. Handelt es sich bei der Antriebs-/Empfangseinheit um ein piezoelektrisches Element mit zwei Bereichen mit einander entgegen gerichteter Polarisation, so ist vorzugsweise der Trennbereich zwischen diesen beiden Bereichen im Wesentlichen in der Mitte des Steges, wobei beide Polarisationen jeweils senkrecht auf dem Steg stehen und jeweils einmal vom Steg weg- und einmal zum Steg hinweisen. Durch diese Ausgestaltung wird eine Seite des Steges niedergedrückt, während die andere Seite nach oben gezogen wird. Dabei seien die Orientierungen hier auf die Innenseite der Membran, d.h. auf die vom Medium abgewandte Seite der Membran bezogen.

Eine Ausgestaltung sieht vor, dass die Hemmeinheit den Steg durchdringt oder dass der Steg die Hemmeinheit durchdringt, und dass die Antriebs-/Empfangseinheit ringförmig ausgestaltet ist, wobei die Hemmeinheit durch die ringförmige Antriebs-/Empfangseinheit hindurchragt oder wobei die ringförmige Antriebs-/Empfangseinheit durch die Hemmeinheit hindurchragt. Der Steg und die Hemmeinheit sind somit derartig ausgestaltet und angeordnet, dass sie sich gegenseitig durchdringen oder miteinander verbunden oder zumindest gekoppelt sind.

Die Erfindung wird anhand der nachfolgenden Zeichnungen näher erläutert. Es zeigt:
Fig. 1: eine angeschnittene räumliche Darstellung einer ersten Variante des mechanischen Aufbaus eines erfindungsgemäßen Messgerätes,
Fig. 2: eine schematische Darstellung der Schwingungsbewegungen der Membran,
Fig. 3: ein anderer Schnitt durch die Membran der Fig. 2,
Fig. 4: ein Schnitt durch den mechanischen Aufbau einer zweiten Variante,
Fig. 5: eine angeschnittene räumliche Darstellung der zweiten Variante des mechanischen Aufbaus gemäß Fig. 4,
Fign. 6a, b und c: drei schematische Darstellungen eines piezoelektrischen Elements für die Anwendung in einem erfindungsgemäßen Messgerät, und
Fign. 7a, b und c: drei Varianten für die Kontaktierungen eines piezoelektrischen Elements in Verbindung mit der Membran, und
Fig. 8: eine angeschnittene räumliche Darstellung einer dritten Variante des mechanischen Aufbaus.

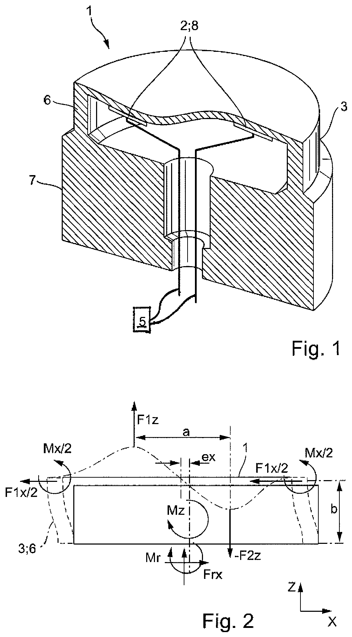

Die Fig. 1 zeigt die bei den Schwingungen direkt beteiligten Bauteile des erfindungsgemäßen Messgerätes. Die mechanisch schwingfähige Einheit besteht erfindungsgemäß nur aus der Membran 1. Dies hat beispielsweise den Vorteil, dass so das Messgerät frontbündig z.B. in die Behälterwand des Behälters, in welchem sich das Medium befindet, eingebaut werden kann. Zur Schwingungserzeugung besteht hier die Antriebs-/Empfangseinheit 2 aus zwei piezoelektrischen Elementen 8, welche auf der Innenseite, d.h. auf der vom Medium abgewandten Seite der Membran 1 flächig festgeklebt sind. Dies ist ein sog. Bimorphantrieb. Die Elemente sind dabei axial, d.h. senkrecht zur Membranebene polarisiert. Werden die Elemente der Antriebs-/Empfangseinheit 2 mit einer elektrischen Wechselspannung beaufschlagt, so dehnen sie sich in Richtung ihrer Polarisation aus und ziehen sich in radialer Richtung zusammen. Durch die Klebung führt dies dazu, dass die Membran 1 jeweils eine Biegeverformung ausführt. Sind die beiden Elemente 2 einander entgegengesetzt polarisiert und werden sie mit dem gleichen Spannungssignal beaufschlagt oder haben sie gleiche Polarisation, werden aber gegenphasig angeregt, so führt die Membran 1 mit einem Teil eine Schwingung nach oben bzw. nach außen bzw. in Richtung des Mediums und mit dem anderen Teil eine Schwingung in Richtung des Inneren des Messgerätes aus. Insgesamt wird somit die Membran 1 in ihrer zweiten Eigenmode angeregt. Eine Anregung der ersten Eigenmode bzw. der Grundmode ist durch die Anordnung der zwei Piezoelemente 8 nicht möglich. Dies ist in der Fig. 1 leicht angedeutet. Sollen anderen Schwingungsmoden angeregt werden, so empfiehlt sich in dieser Anregungsvariante die Anbringung einer entsprechend höheren Anzahl von piezoelektrischen Elementen.

Die Antriebs-/Empfangseinheit 2 empfängt im gezeigten Beispiel umgekehrt auch die mechanischen Schwingungen und wandelt sie in eine elektrische Wechselspannung um. Die Kenngrößen der Schwingungen, wie Amplitude, Frequenz und Phasenverlauf über Frequenz relativ zum Anregesignal hängen vom Grad der Bedeckung der Membran 1 durch das Medium und auch von einigen Prozessgrößen des Mediums selbst, wie Dichte, Viskosität oder Dämpfung ab. Die Auswertung des Empfangssignals und daraus die Bestimmung bzw. Überwachung der Prozessgröße wird sodann von der Auswerteeinheit 5 übernommen. Handelt es sich beispielsweise bei dem Medium um eine Flüssigkeit, so führt eine Bedeckung der Membran 1 durch das Medium zu einer Verminderung der Schwingungsfrequenz. Bei Schüttgütern ist dies entsprechend die Schwingungsamplitude. Somit kann das Absinken der Frequenz bzw. der Amplitude unter einen vorgebbaren Grenzwert dahingehend verstanden werden, dass das Medium den mit dem Grenzwert verbundenen Füllstand erreicht bzw. überschritten hat. Umgekehrt bedeutet eine Frequenz- bzw. Amplitudenerhöhung, dass der Füllstand unterschritten wurde. Die Membran 1 ist dabei an dem Ring 6 der Einspannung 3 befestigt. Der Ring 6 geht in das Einschraubstück 7 über, vermittels dessen das Messgerät an seinem Anwendungsbereich fixiert wird.

In der Fig. 2 ist ein Schnitt durch eine schematische Membran 1 und deren Einspannung 3 bzw. dessen Ring 6 dargestellt. Eine nicht maßstabsgetreue Darstellung der Schwingungsbewegung ist gestrichelt bzw. gepunktet dargestellt. Die Membran 1 führt dabei eine Schwingung ihrer zweiten Eigenmode aus. Während der Schwingbewegung der Membran 1 übertragen die beiden Membranhälften in der in Fig. 2 gezeigten X-Z-Schnittebene aufgrund der gegenphasigen Bewegung Kräfte F1z bzw. -F1z senkrecht zur Membranebene, die gegenphasig wirken. Bei symmetrischem Aufbau sind beide Beschleunigungskräfte in Richtung und Größe gleich und heben sich somit in der Kräftebilanz in der Z-Richtung senkrecht auf der Membranebene gegeneinander auf. Da beide Kräfte um den Abstand a zueinander versetzt sind, erzeugen sie ein Drehmoment Mz(t) = F1z(t) * a.

Aufgrund der Biegebewegung der Membran 1 werden in der Einspannung 3 Drehmomente erzeugt, die den Haltering 6 geringfügig deformieren. Die Steifigkeiten in der Membraneinspannung sind je nach Bewegungsrichtung geringfügig verschieden, z.B. wird die Membranverschiebung in der Einspannung geringfügig größer, wenn sie sich nach außen bewegt bzw. kleiner, wenn sie sich nach innen bewegt. Dies führt dazu, dass die Membran 1 während der Schwingbewegung einen geringen Versatz ex in radialer Richtung ausführt und somit aufgrund der bewegten Masse beidseitig je eine Kraft F1x/2 erzeugt. Sie wirken links- und rechtsseitig in die gleiche Richtung. Die gesamte Membranbewegung in radialer Richtung entspricht dem Versatz ex. Das Drehmoment Mx(t)=F1x*b wirkt dem Drehmoment Mz(t) in jeder Phase der Schwingbewegung entgegen.

Bei richtiger Dimensionierung des Hebelarms b ist Mx(t) = Mz(t), so dass ein solches Schwingungssystem in sich entkoppelt ist. Die Reaktionskraft Fr und das Reaktionsmoment Mr in der Einspannung werden Null. Der Schwingungserzeugung dient somit allein die Membran 1, jedoch dient ein Teil der Einspannung des Auffangens von Kräften und Momenten.

Die Einspannung 3 kann hier als elastischer Haltering 6 verstanden werden, welcher an seinem unteren Bereich an dem massiven Einschraubstück 7 fixiert ist.

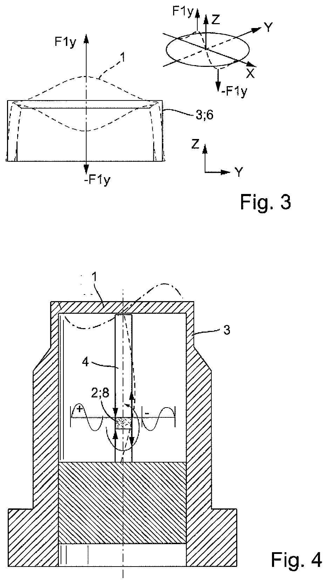

In der Fig. 3 ist ein anderer Schnitt durch die Membran 1 und die Einspannung 3 bzw. dessen oberer Ring 6 gezeigt. Gestrichelt sind zwei Schwingungsrichtungen dargestellt. Die Ebene senkrecht zur Schwingungsrichtung ist in radialer Richtung kräfte- und momentenfrei, weil die in der Schwingebene nahezu bewegungsfreie "neutrale Linie" (angedeutet entlang der Y-Achse) in der Umkehrung der Membran 1 idealisiert keine Deformation erfährt.

Der in Fig. 4 dargestellte Membranschwinger ist mit einem Stößel als Hemmeinheit 4 ausgestattet, der die Membran 1 mit dem Einschraubstück 7 der Einspannung 3 fest verbindet. Der Stößel 4 muss jedoch nicht direkt mit dem Einschraubstück 7 verbunden sein. Für die Funktion der Hemmung der Grundschwingungen muss allein wenigstens eine Fixierung vorgesehen sein. Zwischen dem Stößel 4 am unteren Ende ist ein piezoelektrisches Ringelement 8 eingebaut, mit dem die Membran 1 als Antriebs-/Empfangseinheit 2 angeregt wird.

Für die Schwingungsanregung besitzt das piezoelektrische Element 8 zwei voneinander elektrisch getrennte Elektroden. Legt man an die erste Elektrode eine Wechselspannung und an die zweite eine gleich große, aber gegenphasig vorliegende Wechselspannung an, so wird der Stößel 4 aufgrund der axial asymmetrischen Deformation des Piezoelements 2 in Biegeschwingungen versetzt. Die Hin- und Herbewegung des Stößels 4 überträgt auf die Membran 1 ein wechselndes Drehmoment. Die Schwingfrequenz entspricht dabei der Eigenfrequenz der gegenphasigen Membranmode.

Durch die Zwangsbewegung des Stößels 4 kann die im Schwinger existierende erste Eigenmode bzw. die Grundmode nicht angeregt werden, was für das komplette Schwingungssystem, inklusive der hier nicht dargestellten Rückkopplungselektronik, mit welcher die Antriebs-/Empfangseinheit 2 verbunden ist, vorteilhaft ist.

Während der Bimorphantrieb der Fig. 1 bis maximal 150 °C funktionsfähig auslegbar ist, lässt sich der Stößelantrieb bis über 300 °C einsetzen. Die Anwendungsgrenze ist nicht durch das Schwingermaterial selbst, sondern durch das verwendete piezoelektrische Material begrenzt. Hinsichtlich der Prozessdruckbelastung bietet der Stößel 4 gegenüber der Bimorphausführung einen zusätzlichen Vorteil, weil er die Membran 1 stabilisiert und somit höhere Druckbelastungen übertragen werden können.

Betrachtet man die in Fig. 4 dargestellte Schwingungsmode (gestrichelte Linie), so erkennt man eine Stelle, in der aufgrund der gegenphasigen Bewegung der Membran 1 keine oder nur sehr geringe Bewegungen vorliegen. Genau genommen ist es ein Punkt in der Membranmitte bzw. eine Linie quer zur Symmetrieachse, die nahezu bewegungsfrei ist. Befestigt man in der nahen Umgebung der Membranmitte einen Stößel 4, so existiert die Grundmode der freien Membrane nicht mehr, weil der Freiheitsgrad in axialer Z-Richtung durch den Stößel eingeschränkt ist, d.h. die Grundmode wird gehemmt. Demzufolge ist die erste im Schwinger vorliegende Eigenmode die gegenphasige Membranbewegung, also die erste Oberwelle der Membran 1, was Vorteile hinsichtlich der Elektronikauslegung bietet. Ein zusätzlicher Vorteil ist im Druckbereich zu sehen. Der Stößel bietet eine erhöhte Stabilität für die unter Prozessdruck stehende Membran 1. Der maximal erreichbare Prozessdruck für einen Sensor mit einer 3/4 Zoll großen Membran 1 mit einer Dicke von 0.8 mm liegt in der Größenordnung von 100 bar, ohne dass plastische Verformungen zu befürchten sind. Vorteilhaft ist weiterhin, dass der Stößel 4 direkt als Antrieb verwendet werden kann. Dazu ist ein axial polarisiertes piezoelektrisches Element 8 mit halbseitig getrennten Elektroden (rechts und links von der Symmetrieachse) zwischen den Stößel 4 gespannt. Bei Anlegen einer elektrischen Wechselspannung an eine Elektrode und gegenphasig an die andere Elektrode (dargestellt durch die beiden Signalverläufe der angelegten Wechselspannungssignale) überträgt das Piezoelement 2 quer zur Symmetrieachse auf den Stößel 4 ein zeitabhängiges Drehmoment. Dieses Drehmoment wird über die elastische Verbindung direkt auf die Membran 1 übertragen. Die Anregefrequenz der gegenphasigen Schwingungsmode der Membran 1 entspricht dabei der gegenphasigen Biegemode der Membran 1. Die gleichphasige Mode, bei der die komplette Membran 1 in einer Grundwellenschwingung in gleiche Richtung bewegt wird, kann durch den Antrieb 2 nicht in Schwingungen versetzt werden.

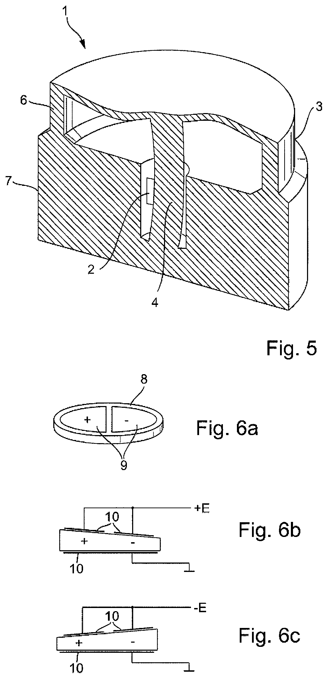

In der Fig. 5 ist eine weitere Variante der Schwingungserzeugung dargestellt, in welcher die Antriebs-/Empfangseinheit 2 auf der Seite der Hemmeinheit 4 angebracht ist. Die Membran 1 befindet sich hierbei in einer Schwingung. Hier werden ebenfalls Biegebewegungen erzeugt, welche den Stößel 4 zu Kippbewegungen anregen. Diese Schwingungserzeugung lässt sich auch in Form von Spulenanordnungen an der Hemmeinheit 4 erzeugen. In der Darstellung ist auch der obere Teil der Einspannung 3 als ein Ring 6 zu erkennen, welcher mit dem Grundkörper 7 fest verbunden ist.

Die Fig. 6a zeigt ein piezoelektrisches Element 8, wie es beispielsweise in einer Antriebs-/Empfangseinheit Verwendung finden kann. Das Element 8 ist scheibenförmig mit runder oder ovaler Oberfläche, mit welcher es auch vorzugsweise an der Membran befestigt wird. Die Polarisation verläuft dabei vorzugsweise in axialer Richtung, d.h. im eingebauten Zustand senkrecht zur Membranebene. In dieser Ausgestaltung sind dabei die Polarisationen der beiden Bereiche 9 des Elements 8 einander entgegengerichtet. Dies ist durch das Plus- bzw. Minuszeichen verdeutlicht.

In den Figuren 6b und 6c ist der Fall dargestellt, dass über die Elektroden 10 das piezoelektrische Element 8 mit einer Wechselspannung (Zustand mit +E in Fig. 6b und mit -E in Fig. 6c) beaufschlagt wird. Die untere Fläche des Elements 8 ist hier vollständig mit Masse verbunden. Je nach der anliegenden Spannung zieht sich ein Bereich 9 zusammen bzw. dehnt er sich aus, so dass eine Wechselspannung auch eine entsprechende Oszillation der Dicke des piezoelektrischen Elements 8 erzeugt. Der Vorteil liegt nun darin, dass ein einziges piezoelektrisches Element 8 quasi zwei Teilbewegungen erzeugt. Durch die passende Verbindung mit der Membran führt auch jeweils ein Teilbereich der Membran -jeweils in Abhängigkeit davon, oberhalb von welchem Bereich des piezoelektrischen Elements 8 sich der Teilbereich befindet - eine eigene Schwingung aus, wobei überdies die Schwingungen der Teilbereiche, welche sich oberhalb der Bereiche des piezoelektrischen Elements befinden, gegenphasig sind. Weiterhin erlaubt es dieses piezoelektrische Element 8 nicht, eine Grundmode der Membran anzuregen.

Damit die Teilbereiche jeweils die gleiche Kraft erfahren bzw. damit auch die Empfindlichkeit für die Schwingungen bei der Detektion ebenfalls jeweils gleich groß ist, haben die getrennten Bereiche 9 des piezoelektrischen Elements 1 jeweils im Wesentlichen die gleiche Größe.

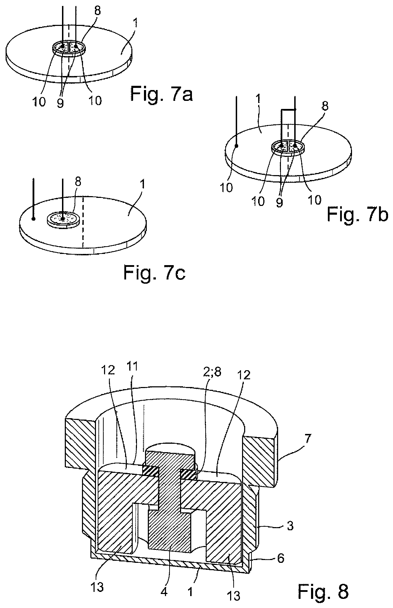

In der Fig. 7 sind drei beispielhafte Varianten für die Ausgestaltung von Antriebs-/Empfangseinheit 2 bzw. das piezoelektrische Element 8 und Membran 1 dargestellt.

Die Fig. 7a zeigt ein piezoelektrisches Element 8, welches auf der Innenseite der Membran 1 befestigt ist. Die Membran 1 soll hier zu solchen Schwingungen angeregt werden, bei welchen zwei symmetrische Teilbereiche gegenphasig zueinander schwingen. Es wird also quasi die erste Oberwelle angeregt. Die Membran 1 sei dabei kreisförmig, so dass die beiden Teilbereiche jeweils einen Halbkreis bilden. Die Membran 1 ist dabei - hier nicht gezeigt - an ihrem Rand kraftschlüssig mit dem Prozessanschluss verbunden.

Das piezoelektrische Element 8 ist axial polarisiert, d.h. die Polarisation verläuft senkrecht zur Membranebene. Auf dem piezoelektrischen Element 8 sind zwei symmetrische Elektroden 10 aufgebracht. Für die Schwingungserzeugung werden jeweils gegenphasige Signale auf die Elektroden 10 gegeben. Handelt es sich insbesondere um ein elektrisches Wechselspannungssignal, so führen die Bereiche 9 des piezoelektrischen Elements 8 jeweils gegenphasige Dickenoszillationen aus, d.h. schrumpft der eine Bereich, so dehnt sich der andere aus.

Insbesondere ist hier der Trennbereich zwischen den beiden Bereichen 9 des piezoelektrischen Elements 8 oberhalb des Trennbereichs bzw. der Trennlinie der Membran 1 angebracht, so dass also ein Bereich des piezoelektrischen Elements 8 gerade oberhalb (bzw. von der Prozessseite her gesehen unterhalb) eines Teilbereichs der Membran 1 zu liegen kommt. D.h. das hier runde piezoelektrische Element 8 ist in der Mitte der hier runden Membran 1 angeordnet. Das piezoelektrische Element 8 ist dabei beispielsweise eine Keramik oder in einer anderen Ausgestaltung ein Einkristall.

In der Fig. 7b sind die beiden Elektroden 10 elektrisch kurzgeschlossen. Dabei ist die - hier insbesondere elektrisch leitfähig ausgestaltete - Membran 1 mit einer weiteren Elektrode verbunden. Auf die Elektroden 10 des piezoelektrischen Elements 8 bzw. die der Membran 1 wird eine Wechselspannung gegeben, so dass die Schwingungen erzeugt werden.

Die Fig. 7c zeigt eine weitere Ausgestaltung, bei welcher das piezoelektrische Element 8 unterhalb von einem Teilbereich der Membran 1 aufgebracht ist. Das piezoelektrische Element 8 dient hier vollständig der Schwingungserzeugung des entsprechenden Teilbereichs. Auf die Elektroden der Membran 1 bzw. des piezoelektrischen Elements 8 wird auch hier ein Wechselspannungssignal gegeben. Insgesamt schwingen dadurch auch die beiden symmetrischen, d.h. gleichgroßen Teilbereiche der Membran 1 gegenphasig.

In dem erfindungsgemäßen Messgerät werden somit die Oberwellen der Membran, welche sich aus gegenphasigen Schwingungen von Teilbereichen der Membran zusammensetzen, zur Bestimmung und/oder Überwachung der Prozessgröße herangezogen. Alternativ lässt sich formulieren, dass die Membran zu Schwingungsmoden angeregt wird, welche oberhalb der Grundmode oder der Mode mit der niedrigsten Eigenfrequenz liegen, und dass diese Moden sich dadurch auszeichnen, dass Teilbereiche der Membran, welche symmetrisch zueinander sind, gegenphasige Schwingungen ausführen. Die Messungen gehen dabei von der Wechselwirkung zwischen Membran 1 und Medium bzw. von den Auswirkungen des Mediums auf die Kenngrößen der mechanischen Schwingungen aus.

Die Oberwellen werden dabei beispielsweise derartig erzeugt, dass die Antriebs-/Empfangseinheit nur Oberwellen erzeugen kann oder dass die Grundwelle der Membran passend unterdrückt wird.

In der Fig. 8 ist eine weitere Ausgestaltung des Membranschwingers angeschnitten dargestellt. Hierbei handelt es sich um eine Art von Wipp-Antrieb. Hinter der Membran 1, d.h. auf der vom Medium abgewandten Seite befindet sich eine Wippe, welche aus einem Steg 11, der hier im Wesentlichen parallel zur Fläche der Membran 1 angeordnet ist, und zwei Trägereinheiten 13 besteht. Über die Trägereinheiten 13 ist somit der Steg 11 mechanisch mit der Membran 1 gekoppelt. Im hier gezeigten Fall ist die Wippe einstückig in Form eines Us ausgebildet. Bei der hier kreisförmigen Membran 1 gleicht dabei der Steg 11 einer verbreiterten Diagonalen eines Kreises parallel zur Membran 1.

Oberhalb der Mitte der Membran 1 ist die Hemmeinheit 4 angeordnet, welche durch die Mitte des Stegs 11 hindurchgeht. Hemmeinheit 4 und Steg 11 durchdringen sich somit abschnittsweise. Eingeklemmt zwischen einem Stempel am Ende der Hemmeinheit 4 und dem Steg 11 befindet sich die Antriebs-/Empfangseinheit 2, welche hier als piezoelektrisches Element 8 ausgestaltet ist. Durch die Mitte des kreisförmigen piezoelektrischen Elements 8 geht die Hemmeinheit 4 hindurch. Das piezoelektrische Element 8 weist - wie oben detailliert beschrieben - zwei Bereiche auf, die einander entgegengerichtet polarisiert sind. Wird an dieses Element 8 eine Spannung angelegt, so bewirkt dies, dass eine Seite des Steges 11 in Richtung der Membran 1 und die andere Seite von dieser fort bewegt wird. D.h. insbesondere zeigen die Endbereiche 12 des Steges gegenphasige Bewegungen. Durch eine Wechselspannung ergibt sich somit eine Wippbewegung des Steges 11.

Die beiden Trägereinheiten 13 ruhen dabei nur an ihren äußersten Stellen auf der Membran 1, so dass die mechanischen Eigenschaften der Membran 1 kaum beeinflusst werden.

### Bezugszeichenliste

**Tabelle 1**

| | |
|---|---|
| 1 | Membran |
| 2 | Antriebs-/Empfangseinheit |
| 3 | Einspannung |
| 4 | Hemmeinheit |
| 5 | Auswerteeinheit |
| 6 | Ring |
| 7 | Einschraubstück |
| 8 | Piezoelektrisches Element |
| 9 | Bereich des piezoelektrischen Elements |
| 10 | Elektrode |
| 11 | Steg |
| 12 | Endbereich des Stegs |
| 13 | Trägereinheit |

## Patentansprüche

1. Frontbündiger Membranschwinger zur Bestimmung und/oder Überwachung mindestens einer Prozessgröße eines Mediums, welches Medium sich in einem Behälter befindet,
mit mindestens einer mechanisch schwingfähigen Membran (1), welche eine Vielzahl von natürlichen Eigenmoden aufweist,
wobei die Membran (1) an mindestens einer Einspannung (3) befestigt ist, wobei die Einspannung aus einem Ring (6) besteht, an welchem die Membran (1) befestigt ist, und aus einem Grundkörper (7), welcher sich an den Ring (6) anschließt und welcher die Befestigung an dem Behälter erlaubt,
und
mit mindestens einer Anrege-/Empfangseinheit (2), welche die Membran (1) zu mechanischen Schwingungen anregt und/oder welche von der Membran (1) mechanische Schwingungen empfängt,
und wobei die Antriebs-/Empfangseinheit (2) und die Membran (1) derartig ausgestaltet und aufeinander abgestimmt sind, dass die Membran (1) lediglich mechanische Schwingungen ausführt, welche Moden entsprechen, die oberhalb der Grundmode der Membran (1) liegen.

2. Membranschwinger nach Anspruch 1,
wobei die Antriebs-/Empfangseinheit (2) und die Membran (1) derartig ausgestaltet und/oder relativ zueinander angeordnet sind, dass das Auftreten von mechanischen Schwingungen der Membran (1), welche der Grundmode der Membran (1) entsprechen, im Wesentlichen verhindert ist.

3. Membranschwinger nach mindestens einem der Ansprüche 1 oder 2 ,
wobei die Antriebs-/Empfangseinheit (2) und die Membran (1) derartig ausgestaltet und aufeinander abgestimmt sind, dass die Membran (1) derartige mechanische Schwingungen ausführt, dass sich 2*n, insbesondere symmetrische Teilbereiche der Membran (1) ergeben, und dass jeweils benachbarte Teilbereiche gegenphasige Bewegungen ausführen,
wobei n eine natürliche Zahl ist.

4. Membranschwinger nach mindestens einem der Ansprüche 1 bis 3,
wobei die Antriebs-/Empfangseinheit (2) und die Membran (1) derartig ausgestaltet und aufeinander abgestimmt sind, dass die Membran (1) in dem Fall, dass die Membran (1) frei von Medium schwingt, mechanische Schwingungen mit einer Frequenz größer als 2 kHz, insbesondere größer als 5kHz bzw. 20kHz, ausführt.

5. Membranschwinger nach mindestens einem der Ansprüche 1 bis 5,
wobei mindestens eine Auswerteeinheit (5) vorgesehen ist, welche die mechanischen Schwingungen der Membran (1) in Hinsicht auf die Prozessgröße auswertet.

6. Membranschwinger nach mindestens einem der Ansprüche 1 bis 6,
wobei die Antriebs-/Empfangseinheit (2) mindestens ein piezoelektrisches Element (8) aufweist,
dass das piezoelektrische Element (8) derartig ausgestaltet und/oder kontaktiert ist, dass das piezoelektrische Element (8) mindestens zwei getrennte Bereiche (9) aufweist,
und
dass das piezoelektrische Element (8) derartig angeordnet und mit der Membran (1) verbunden ist, dass die zwei getrennten Bereiche (9) des piezoelektrischen Elements jeweils einen Teilbereich der Membran (1) zu mechanischen Schwingungen anregen.

7. Membranschwinger nach mindestens einem der Ansprüche 1 bis 6,
wobei die Antriebs-/Empfangseinheit (2) mindestens ein piezoelektrisches Element (8) aufweist,
dass das piezoelektrische Element (8) derartig angeordnet und mit der Membran (1) verbunden ist, dass das piezoelektrische Element (8) einen Teilbereich der Membran (1) zu mechanischen Schwingungen anregen.

8. Membranschwinger nach mindestens einem der Ansprüche 1 bis 6,
wobei die Antriebs-/Empfangseinheit (2) mindestens zwei piezoelektrische Elemente (8) aufweist,
dass die piezoelektrischen Elemente (8) an unterschiedlichen Bereichen mit der Membran (1) verbunden sind, und
dass die piezoelektrischen Elemente (16) Biegeverformungen der Membran (1) erzeugen.

9. Membranschwinger nach mindestens einem der Ansprüche 1 bis 9,
wobei mindestens eine Hemmeinheit (4) vorgesehen ist, welche derartig ausgestaltet und mit der Membran (1) verbunden ist, dass Schwingungen der Grundmode der Membran (1) durch die Hemmeinheit (4) verhindert sind.

10. Membranschwinger nach Anspruch 10,
wobei die Hemmeinheit (4) im Wesentlichen in der Mitte der Membran (1) befestigt ist.

11. Membranschwinger nach mindestens einem der Ansprüche 10 bis 11,
wobei die Antriebs-/Empfangseinheit (2) derartig ausgestaltet und mit der Hemmeinheit (4) verbunden ist, dass die Antriebs-/Empfangseinheit (2) die Membran (1) über die Hemmeinheit (4) zu mechanischen Schwingungen anregt.

12. Membranschwinger nach mindestens einem der Ansprüche 10 bis 12,
wobei mindestens ein Steg (11) vorgesehen ist,
dass der Steg (11) mit der Membran (1) mechanisch gekoppelt ist,
und
dass die Antriebs-/Empfangseinheit (2) derartig ausgestaltet und mit dem Steg (11) verbunden ist, dass der Steg (11) zumindest zeitweise im Wesentlichen eine Wippbewegung ausführt.

13. Membranschwinger nach Anspruch 13,
wobei der Steg (11) über mindestens zwei Trägereinheiten (13) mit der Membran (1) mechanisch gekoppelt ist.

14. Membranschwinger nach mindestens einem der Ansprüche 13 bis 14,
wobei die Hemmeinheit (4) den Steg (11) durchdringt oder dass der Steg (11) die Hemmeinheit (4) durchdringt,
und
dass die Antriebs-/Empfangseinheit (2) ringförmig ausgestaltet ist,
wobei die Hemmeinheit (4) durch die ringförmige Antriebs-/Empfangseinheit (2) hindurchragt
oder
wobei die ringförmige Antriebs-/Empfangseinheit (2) durch die Hemmeinheit (4) hindurchragt.

## Claims

1. Flush-mount membrane oscillator for determining and/or monitoring at least one process variable of a medium, said medium being located in a vessel, with at least one membrane (1) able to vibrate mechanically, said membrane having multiple eigenmodes,
wherein the membrane (1) is fixed to at least one clamping unit (3), said clamping unit comprising a ring (6) on which the membrane is fixed (1), and a meter body (7), which follows from the ring (6) and which permits the fastening on the vessel,
and
with at least one excitation/reception unit (2), which excites the membrane (1) to perform mechanical vibrations and/or which receives mechanical vibrations from the membrane (1),
and wherein the drive/reception unit (2) and the membrane (1) are designed and aligned with one another in such a way that the membrane (1) only executes mechanical vibrations that correspond to modes that are above the fundamental mode of the membrane (1).

2. Membrane oscillator as claimed in Claim 1,
wherein the drive/reception unit (2) and the membrane (1) are designed and/or arranged in relation to one another in such a way that essentially prevents the occurrence of mechanical vibrations of the membrane (1) that correspond to the fundamental mode of the membrane (1).

3. Membrane oscillator as claimed in at least one of the Claims 1 or 2,
wherein the drive/reception unit (2) and the membrane (1) are designed and arranged in relation to one another in such a way that the membrane (1) performs such mechanical vibrations that result in 2*n, particularly symmetrical sections of the membrane (1), and that adjacent sections execute counter-phase movements,
n being a natural number.

4. Membrane oscillator as claimed in at least one of the Claims 1 to 3,
wherein the drive/reception unit (2) and the membrane (1) are designed and arranged in relation to one another in such a way that when the membrane (1) oscillates free without contact with the medium, the membrane (1) performs mechanical vibrations with a frequency greater than 2 kHz, particularly greater than 5 kHz or 20 kHz.

5. Membrane oscillator as claimed in at least one of the Claims 1 to 5,
wherein at least one evaluation unit (5) is provided, which evaluates the mechanical vibrations of the membrane (1) with regard to the process variable.

6. Membrane oscillator as claimed in at least one of the Claims 1 to 6,
wherein the drive/reception unit (2) has at least one piezoelectric element (8), wherein the piezoelectric element (8) is designed and/or put in contact in such a way that the piezoelectric element (8) has at least two separate areas (9),
and
that the piezoelectric element (8) is arranged and connected with the membrane (1) in such a way that the two separate areas (9) of the piezoelectric element each cause a section of the membrane (1) to perform mechanical vibrations.

7. Membrane oscillator as claimed in at least one of the Claims 1 to 6,
wherein the drive/reception unit (2) has at least one piezoelectric element (8), wherein the piezoelectric element (8) is arranged and connected with the membrane (1) in such a way that the piezoelectric element (8) excites a section of the membrane (1) to perform mechanical vibrations.

8. Membrane oscillator as claimed in at least one of the Claims 1 to 6,
wherein the drive/reception unit (2) has at least two piezoelectric elements (8), wherein the piezoelectric elements (8) are connected to the membrane (1) at different sections, and
wherein the piezoelectric elements (16) generate flexural deformations of the membrane (1).

9. Membrane oscillator as claimed in at least one of the Claims 1 to 9,
wherein at least one restraint unit (4) is provided, which is designed and connected to the membrane (1) in such a way that fundamental mode vibrations of the membrane (1) are prevented by the restraint unit (4).

10. Membrane oscillator as claimed in Claim 10,
wherein the restraint unit (4) is essentially fixed in the middle of the membrane (1).

11. Membrane oscillator as claimed in at least one of the Claims 10 to 11,
wherein the drive/reception unit (2) is designed and connected to the restraint unit (4) in such a way that the drive/reception unit (2) excites the membrane (1) to perform mechanical vibrations via the restraint unit (4).

12. Membrane oscillator as claimed in at least one of the Claims 10 to 12,
wherein at least one bar (11) is provided,
wherein the bar (11) is mechanically coupled with the membrane (1),
and
the drive/reception unit (2) is designed and connected with the bar (11) in such a way that the bar (11) essentially performs a rocking motion at least temporarily.

13. Membrane oscillator as claimed in Claim 13,
wherein the bar (11) is mechanically coupled with the membrane (1) via at least two support units (13).

14. Membrane oscillator as claimed in at least one of the Claims 13 to 14
wherein the restraint unit (4) penetrates the bar (11) or wherein the bar (11) penetrates the restraint unit (4),
and
wherein the drive/reception unit (2) has an annular design,
wherein the restraint unit (4) extends through the annular drive/reception unit (2)
or
wherein the annular drive/reception unit (2) extends through the restraint unit (4).

## Revendications

1. Vibreur à membrane affleurant, destiné à la détermination et/ou la surveillance d'au moins une grandeur process d'un produit, lequel produit se trouve dans un réservoir,
avec au moins une membrane (1) apte à vibrer mécaniquement, laquelle membrane présente un grande nombre de modes propres naturels,
pour lequel la membrane (1) est fixée sur au moins un dispositif de fixation (3), ce dernier étant constitué d'une bague (6) sur laquelle est fixée la membrane (1), et d'un corps de base (7), qui est contiguë à la bague (6) et qui permet la fixation au réservoir,
et
avec au moins une unité d'excitation / de réception (2), laquelle excite la membrane (1) en vibrations mécaniques et/ou laquelle reçoit les vibrations mécaniques de la membrane (1),
et pour lequel l'unité d'entraînement / de réception (2) et la membrane (1) sont conçues et assorties l'une à l'autre de telle sorte que la membrane (1) exécute uniquement des vibrations mécaniques correspondant aux modes situés au-dessus du mode fondamental de la membrane (1).

2. Vibreur à membrane selon la revendication 1,
pour lequel l'unité d'entraînement / de réception (2) et la membrane (1) sont conçues et disposées l'une par rapport à l'autre de telle sorte que l'apparition de vibrations mécaniques de la membrane (1), qui correspondent au mode fondamental de la membrane (1), est pour l'essentiel empêchée.

3. Vibreur à membrane selon au moins l'une des revendications 1 ou 2,
pour lequel l'unité d'entraînement / de réception (2) et la membrane (1) sont conçues et assorties l'une à l'autre de telle sorte que la membrane exécute des vibrations mécaniques, qu'il en résulte des zones partielles 2*n, notamment symétriques, de la membrane, et que les zones partielles voisines exécutent respectivement des mouvements en opposition de phase,
n étant un nombre naturel.

4. Vibreur à membrane selon au moins l'une des revendications 1 à 3,
pour lequel l'unité d'entraînement / de réception (2) et la membrane (1) sont conçues et assorties l'une à l'autre de telle sorte que, dans le cas où la membrane (1) vibre librement (sans contact avec le produit), la membrane (1) exécute des vibrations mécaniques avec une fréquence supérieure à 2 kHz, notamment supérieure à 5 kHz ou 20 kHz.

5. Vibreur à membrane selon au moins l'une des revendications 1 à 5,
pour lequel est prévue au moins une unité d'analyse (5), laquelle analyse les vibrations mécaniques de la membrane (1) par rapport à la grandeur process.

6. Vibreur à membrane selon au moins l'une des revendications 1 à 6,
pour lequel l'unité d'entraînement / de réception (2) comporte au moins un élément piézoélectrique (8),
l'élément piézoélectrique (8) étant conçu et/ou mis en contact de telle sorte que l'élément piézoélectrique (8) présente au moins deux zones séparées (9), et
l'élément piézoélectrique (8) étant disposé et relié avec la membrane (1) de telle sorte que les deux zones (9) séparées excitent respectivement en vibrations mécaniques l'élément piézoélectrique dans une zone partielle de la membrane (1).

7. Vibreur à membrane selon au moins l'une des revendications 1 à 6,
pour lequel l'unité d'entraînement / de réception (2) comporte au moins un élément piézoélectrique (8),
l'élément piézoélectrique (8) étant disposé et relié à la membrane (1) de telle sorte que l'élément piézoélectrique (8) excite en vibration mécaniques une zone partielle de la membrane (1).

8. Vibreur à membrane selon au moins l'une des revendications 1 à 6,
pour lequel l'unité d'entraînement / de réception (2) comporte au moins deux éléments piézoélectriques (8),
les éléments piézoélectriques (8) étant reliés en différentes zones avec la membrane (1), et
les éléments piézoélectriques (16) générant des déformations de flexion de la membrane (1).

9. Vibreur à membrane selon au moins l'une des revendications 1 à 9,
pour lequel est prévue au moins une unité inhibitrice (4), laquelle est conçue et reliée avec la membrane (1) de telle sorte que les vibrations du mode fondamental de la membrane (1) sont empêchées par l'unité inhibitrice (4).

10. Vibreur à membrane selon la revendication 10,
pour lequel l'unité inhibitrice (4) est fixée pour l'essentiel au milieu de la membrane (1).

11. Vibreur à membrane selon au moins l'une des revendications 10 à 11,
pour lequel l'unité d'entraînement / de réception (2) est conçue et reliée avec l'unité inhibitrice (4) de telle sorte que l'unité d'entraînement / de réception (2) excite en vibrations mécaniques la membrane (1) par l'intermédiaire de l'unité inhibitrice (4).

12. Vibreur à membrane selon au moins l'une des revendications 10 à 12,
pour lequel est prévu au moins un méplat (11),
le méplat (11) étant couplé mécaniquement avec la membrane (1),
et
l'unité d'entraînement / de réception (2) étant conçue et reliée avec le méplat (11) de telle sorte que le méplat (11) exécute au moins temporairement pour l'essentiel un mouvement de balancier.

13. Vibreur à membrane selon la revendication 13,
pour lequel le méplat (11) est couplé mécaniquement avec la membrane (1) par l'intermédiaire de deux unités supports (13).

14. Vibreur à membrane selon au moins l'une des revendications 13 à 14
pour lequel l'unité inhibitrice (4) pénètre dans le méplat (11) ou pour lequel le méplat (11) pénètre dans l'unité inhibitrice (4),
et
pour lequel l'unité d'entraînement / de réception (2) est conçue de façon annulaire,
l'unité inhibitrice (4) s'étendant à travers l'unité d'entraînement / de réception (2) annulaire
ou
l'unité d'entraînement / de réception (2) annulaire s'étendant à travers l'unité inhibitrice (4).
